(19) Europäisches Patentamt
European Patent Office
Office européen des brevets

(11) **EP 4 546 588 A1**

(12) **DEMANDE DE BREVET EUROPEEN**

(43) Date de publication:
**30.04.2025 Bulletin 2025/18**

(21) Numéro de dépôt: **24206076.2**

(22) Date de dépôt: **11.10.2024**

(51) Classification Internationale des Brevets (IPC):
***H02H 3/33*** *(2006.01)*     ***H02H 1/06*** *(2006.01)*

(52) Classification Coopérative des Brevets (CPC):
**H02H 3/335;** H02H 1/06

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **13.10.2023 FR 2311057**

(71) Demandeur: SCHNEIDER ELECTRIC
**INDUSTRIES SAS**
**92500 Rueil-Malmaison (FR)**

(72) Inventeurs:
• **BORDET, Bruno**
**38950 SAINT MARTIN LE VINOUX (FR)**
• **LENOIR, Vincent**
**38000 GRENOBLE (FR)**
• **Tian, Simon**
**38330 SAINT ISMIER (FR)**
• **MEUNIER-CARUS, Jérôme**
**38100 GRENOBLE (FR)**

(74) Mandataire: **Lavoix**
**62, rue de Bonnel**
**69448 Lyon Cedex 03 (FR)**

(54) **DISPOSITIF DE PROTECTION ÉLECTRIQUE DIFFÉRENTIELLE**

(57) La présente invention concerne un dispositif de protection électrique différentielle (10), configuré pour être connecté entre une source (3) et une charge (5), le dispositif (10) comprenant un circuit d'alimentation (16), configuré pour être alimenté électriquement par la source (3) sous une tension dite tension d'alimentation ($U_e$), variable au cours du temps, un mécanisme d'ouverture (12), configuré pour basculer dans une configuration d'ouverture, une unité électronique de contrôle (18) comprenant un module de détection de défaut différentiel (68), et un module de régulation d'alimentation (42), connecté au circuit d'alimentation (16). Le module de régulation d'alimentation (42) comprend un détecteur de courant (62), configuré pour effectuer une mesure d'une intensité interne représentative de la tension d'alimentation ($U_e$), l'unité électronique de contrôle (18) étant configurée pour déterminer un ensemble de paramètres de la tension d'alimentation ($U_e$) à partir de la mesure de l'intensité interne.

FIG.1

EP 4 546 588 A1

**Description**

La présente invention concerne un dispositif de protection électrique différentielle.

L'invention se situe dans le domaine de la surveillance et protection contre des défauts des installations électriques.

Il est bien connu de détecter des défauts différentiels, tels que des défauts d'isolement ou des fuites de courant survenant dans les circuits électriques à l'aide de dispositifs de protection différentielle, aussi appelées RCD, de l'anglais Residual Current Device. Ces dispositifs de protection différentielle incorporent de manière connue une unité électronique de contrôle, qui sert à détecter l'apparition d'un défaut différentiel dans le circuit électrique à l'aide de mesures effectuées par un capteur, et qui commande le déclenchement du dispositif de protection différentielle. Une tension d'entrée est appliquée aux bornes de l'unité électronique de contrôle, régulée par l'unité électronique de contrôle en faisant varier un courant interne circulant dans l'unité électronique de contrôle. La tension d'entrée est obtenue à partir d'une tension d'alimentation du dispositif de protection différentielle. La mesure de la tension d'alimentation permet d'intégrer au dispositif de protection électrique différentielle des fonctionnalités supplémentaires.

Afin de connaître la tension d'alimentation, il est connu de la mesurer directement, mais cela rend l'unité électronique de contrôle plus complexe, et plus chère, car elle doit avoir une entrée dédiée pour la mesure de la tension d'alimentation, et il est nécessaire de prévoir des composants additionnels afin de réduire la tension d'alimentation à un niveau exploitable sans risque par l'unité de contrôle électronique, ce qui implique une complexification du dispositif de protection électrique différentielle ainsi qu'une baisse de la fiabilité du dispositif.

Le but de l'invention est alors de proposer un dispositif de protection électrique différentielle permettant de résoudre ces inconvénients et de mesurer la tension d'alimentation de manière simple.

A cet effet, l'invention a pour objet un dispositif de protection électrique différentielle, configuré pour être connecté entre une source et une charge, le dispositif comprenant :

- un circuit d'alimentation, configuré pour être connecté à la source, et pour être alimenté électriquement par la source sous une tension dite tension d'alimentation, variable au cours du temps ;
- un détecteur différentiel, configuré pour effectuer une mesure d'un courant différentiel circulant dans la charge ;
- un mécanisme d'ouverture, configuré pour basculer depuis une configuration de fermeture, dans laquelle la source et la charge sont connectées l'une à l'autre, dans une configuration d'ouverture, dans laquelle la source et la charge sont isolées l'une de l'autre ;
- une unité électronique de contrôle comprenant :

◦ un module de détection de défaut différentiel, connecté au détecteur différentiel et au mécanisme d'ouverture, le module de détection de défaut différentiel étant configuré pour recevoir la mesure du courant différentiel et pour commander un basculement du mécanisme d'ouverture dans la configuration d'ouverture lorsque le module de détection de défaut différentiel détecte un défaut différentiel ; et
◦ un module de régulation d'alimentation, connecté au circuit d'alimentation.

Selon l'invention, le dispositif de protection électrique différentielle est tel que le module de régulation d'alimentation comprend un détecteur de courant, configuré pour effectuer une mesure d'une intensité interne d'un courant interne circulant dans le module de régulation d'alimentation, l'intensité interne étant représentative de la tension d'alimentation, l'unité électronique de contrôle étant configurée pour déterminer un ensemble de paramètres de la tension d'alimentation à partir de la mesure de l'intensité interne effectuée par le détecteur de courant.

Grâce à l'invention, il n'est pas nécessaire de prévoir une entrée supplémentaire dans l'unité électronique de contrôle. En effet, la mesure du courant interne a lieu directement dans l'unité électronique de contrôle, ce qui évite d'ajouter une entrée dédiée à la mesure de la tension d'alimentation. De plus, le courant interne étant déjà adapté à l'exploitation par l'unité électronique de contrôle, il n'est pas nécessaire de prévoir des composants adaptés à la tension d'alimentation, ce qui est le cas si la mesure est faite directement. Le dispositif de protection électrique différentielle est ainsi maintenu à un niveau de complexité équivalent tout en intégrant la mesure d'un ensemble de paramètres de la tension d'alimentation, permettant d'ajouter au dispositif des fonctionnalités supplémentaires sans complexifier l'architecture du dispositif.

Suivant d'autres aspects avantageux de l'invention, le dispositif de protection électrique différentielle comprend une ou plusieurs des caractéristiques suivantes, prises isolément ou suivant toutes les combinaisons techniquement possibles :

- Le module de régulation d'alimentation comprend un élément de contrôle et un amplificateur opérationnel configuré pour contrôler une ouverture ou une fermeture plus ou moins importante de l'élément de contrôle afin de faire varier l'intensité interne pour maintenir une tension de sortie, générée en sortie du module de régulation d'alimentation, constante.

- L'ensemble de paramètres comprend un premier paramètre déterminé par l'unité de contrôle, le premier paramètre étant une valeur efficace de la tension d'alimentation, et dans lequel l'unité électronique de contrôle est configurée pour fonctionner selon un mode normal et au moins un mode dégradé, une puissance consommée par l'unité électronique de contrôle dans le mode dégradé étant inférieure à la puissance consommée par l'unité électronique de contrôle dans le mode normal, l'unité électronique de contrôle étant en outre configurée pour passer du mode normal au mode dégradé lorsque le premier paramètre est inférieur à un seuil de tension.

- Une puissance fournie à l'unité électronique de contrôle lorsque la valeur efficace est inférieure au seuil de tension est inférieure à la puissance consommée par l'unité électronique de contrôle dans le mode normal.
- L'unité électronique de contrôle est configurée pour fonctionner selon un premier mode dégradé et le seuil de tension est un premier seuil de tension, l'unité électronique de contrôle étant en outre configurée pour fonctionner selon un deuxième mode dégradé, la puissance consommée par l'unité électronique de contrôle dans le deuxième mode dégradé étant inférieure à la puissance consommée par l'unité électronique de contrôle dans le premier mode dégradé, l'unité électronique de contrôle étant en outre configurée pour passer du premier mode dégradé au deuxième mode dégradé lorsque le premier paramètre est inférieur à un deuxième seuil de tension, strictement inférieur au premier seuil de tension.
- L'ensemble de paramètres comprend un deuxième paramètre déterminé par l'unité de contrôle, le deuxième paramètre étant un passage à zéro de la tension d'alimentation, et dans lequel l'unité électronique de contrôle met en oeuvre un compteur, l'unité électronique de contrôle étant configurée pour incrémenter une valeur du compteur à chaque détection d'un passage à zéro de la tension d'alimentation, l'unité électronique de contrôle étant en outre configurée pour émettre une alarme lorsque la valeur du compteur est égale à un seuil de compteur.
- La valeur du compteur est remise à zéro lorsque le mécanisme d'ouverture bascule dans la configuration d'ouverture suite à la détection d'un défaut différentiel par le module de détection de défaut différentiel.
- Lorsque la tension d'alimentation est nulle, la valeur du compteur n'est pas incrémentée et est enregistrée par l'unité électronique de contrôle.
- L'unité électronique de contrôle est mise en oeuvre sous forme d'un circuit intégré.
- L'unité électronique de contrôle comprend :
- un module de détermination, configuré pour déterminer la valeur efficace ;
- un module de comparaison de valeur efficace, configuré pour comparer la valeur efficace au seuil de tension ; et
- un module de commande, configuré pour commander un passage de l'unité électronique de contrôle en mode normal si la valeur efficace est supérieure ou égale au seuil de tension et configuré pour commander un passage de l'unité électronique de contrôle en mode dégradé si la valeur efficace est inférieure au seuil de tension.

- L'unité électronique de contrôle comprend :

- un module de détection de passages à zéro, configuré pour détecter un passage à zéro de l'intensité interne et d'en déduire un passage à zéro de la tension d'alimentation ;
- un module de calcul, configuré pour incrémenter la valeur du compteur, le passage à zéro de la tension d'alimentation ayant été détecté ;
- un module de comparaison de compteur, configuré pour comparer la valeur du compteur avec le seuil de compteur ; et
- un module d'émission configuré pour émettre l'alarme lorsque la valeur du compteur est égale au seuil de compteur.

L'invention apparaîtra plus clairement à la lecture de la description qui va suivre, donnée uniquement à titre d'exemple non limitatif, et faite en référence aux dessins dans lesquels :

- [Fig. 1] la figure 1 est un schéma d'un circuit électrique comprenant un dispositif de protection électrique différentielle selon l'invention ;
- [Fig. 2] la figure 2 est un schéma de principe d'un module de régulation d'alimentation selon un premier mode de réalisation de l'invention ;
- [Fig. 3] la figure 3 est un graphe du courant interne pour trois tensions d'alimentation différentes ;
- [Fig. 4] la figure 4 est un logigramme d'un premier procédé mis en oeuvre par le dispositif selon l'invention ;
- [Fig. 5] la figure 5 est un logigramme d'un deuxième procédé mis en oeuvre par le dispositif selon l'invention ; et
- [Fig. 6] la figure 6 est un schéma de principe d'un module de régulation d'alimentation selon un deuxième mode de réalisation de l'invention.

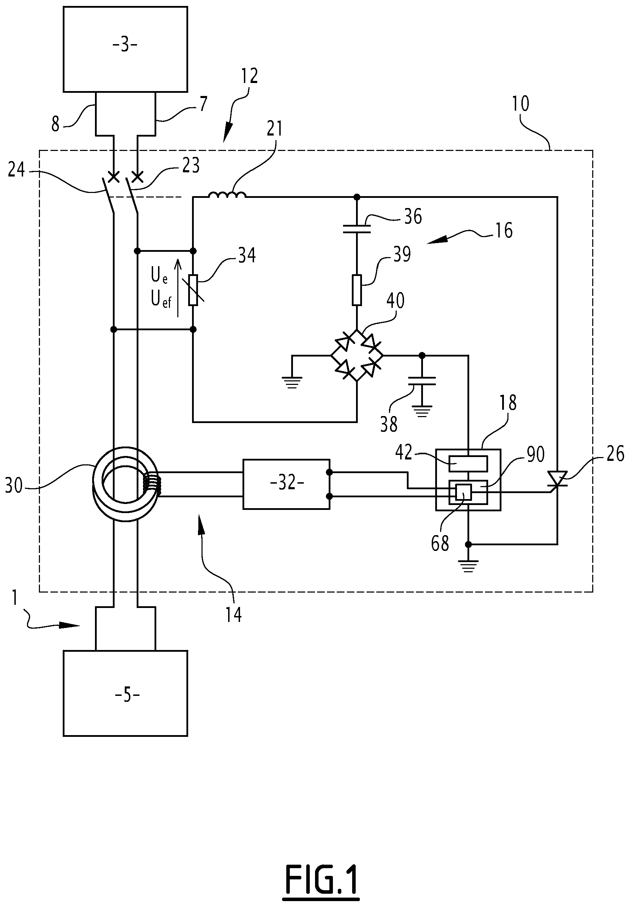

La figure 1 est un schéma d'un circuit électrique 1 comprenant une source 3 et une charge 5, reliées entre elles par un conducteur de phase 7 et un conducteur de neutre neutre 8. La source 3 fournit de l'électricité et est par exemple générateur électrique ou un réseau électrique national. La charge 5 est de manière générale un dispositif consommant de l'électricité, comme un appareil électrique domestique ou un équipement industriel.

Un dispositif de protection électrique différentielle 10, aussi appelé dispositif de protection 10 est connecté entre la source 3 et la charge 5.

Le dispositif de protection 10 comprend un mécanisme d'ouverture 12, un détecteur différentiel 14, un circuit d'alimentation 16 et une unité électronique de contrôle 18, connectée au mécanisme d'ouverture 12, au détecteur différentiel 14 et au circuit d'alimentation 16.

Dans un mode de réalisation, le mécanisme d'ouverture 12 comprend une bobine 21, deux contacts 23 et 24 et un thyristor 26. Les contacts 23 et 24 sont respectivement un contact de phase 23 et un contact de neutre 24. Le mécanisme d'ouverture 12 est configuré pour basculer dans une configuration d'ouverture, dans laquelle les contacts 23 et 24 sont ouverts, isolant ainsi la source 3 et la charge 5 l'une de l'autre. Le dispositif de protection 10 est alors dit déclenché.

Le mécanisme d'ouverture 12 est également configuré pour basculer dans une configuration de fermeture, dans laquelle les contacts 23 et 24 sont fermés, la source 3 et la charge 5 étant ainsi connectées électriquement l'une à l'autre. Le dispositif de protection 10 est alors dit armé, autrement dit, est fermé.

La bobine 21 agit comme un déclencheur afin de basculer les contacts 23 et 24 de la configuration de fermeture à la configuration d'ouverture En effet, lorsque le thyristor 26 est commandé, il génère une impulsion électrique, générant un champ magnétique dans la bobine 21 qui interagit mécaniquement avec les contacts 23 et 24 et ouvre les contacts 23 et 24.

Le détecteur différentiel 14 est configuré pour mesurer un courant différentiel entre le conducteur de phase 7 et le conducteur de neutre 8, circulant dans la charge 5, et comprend un transducteur, qui est, dans l'exemple de la figure 1, un tore 30. Lorsqu'un défaut différentiel est présent dans la charge 5, ou éventuellement dans des connecteurs entre le dispositif de protection 10 et la charge 5, la somme des courants circulant dans le conducteur de phase 7 et le conducteur de neutre 8 est non nulle, générant un courant induit est dans le tore 30. Le détecteur différentiel 14 comprend également une unité de conditionnement 32. L'unité de conditionnement 32 est reliée au tore 30, et comprend notamment des filtres, afin de stabiliser le courant induit dans le tore 30 et améliorer une qualité de la mesure de courant différentiel entre le conducteur de phase 7 et le conducteur de neutre 8.

Le circuit d'alimentation 16 est connecté aux conducteurs de phase 7 et de neutre 8, en aval des contacts 23 et 24. Ainsi, lorsque le mécanisme d'ouverture 12 est en configuration de fermeture, un courant électrique, dit courant d'alimentation, circule dans le circuit d'alimentation 16, et lorsque le mécanisme d'ouverture 12 est en configuration d'ouverture, le courant d'alimentation ne circule pas dans le circuit d'alimentation 16. Le circuit d'alimentation 16 comprend, dans le mode de réalisation décrit, un varistor 34, un composant d'alimentation 36, comme une capacité ou une résistance, une capacité de filtrage 38, une résistance 39 et un pont de diodes 40. Selon un mode de réalisation alternatif, le circuit d'alimentation 16 est connecté aux conducteurs de phase 7 et de neutre 8 en amont des contacts 23 et 24.

Lorsque le mécanisme d'ouverture 12 est en configuration de fermeture, une tension d'alimentation $U_e$ est appliquée au circuit d'alimentation 16, notamment aux bornes du varistor 34. La tension d'alimentation $U_e$ est égale à une tension délivrée par la source 3, et est une tension alternative, de valeur efficace $U_{ef}$, aussi dite tension efficace $U_{ef}$, par exemple égale à 230V.

La tension efficace $U_{ef}$ peut varier dans le temps de façon imprévisible, par exemple à cause de légères fluctuations sur un réseau électrique alimentant la source 3, où suite à un dysfonctionnement de la source 3 ou du réseau électrique alimentant la source 3. Ainsi, la tension d'alimentation $U_e$ est variable dans le temps de par son caractère alternatif et aussi car sa valeur efficace $U_{ef}$ est potentiellement variable dans le temps.

Le circuit d'alimentation 16 convertit le courant d'alimentation en un courant d'entrée redressé, de tension, dite tension d'entrée, de valeur efficace $V_{in}$ inférieure à la valeur efficace $U_{ef}$ de la tension d'alimentation $U_e$. La tension d'entrée est appliquée en entrée de l'unité électronique de contrôle 18. Le circuit d'alimentation 16 assure ainsi une alimentation électrique de l'unité électronique de contrôle 18 adaptée, c'est-à-dire de courant et tension redressés et inférieurs aux courant et tension délivrés par la source 3, pour éviter d'endommager l'unité électronique de contrôle 18 en l'alimentant avec un courant de tension et d'intensité trop élevés et alternatifs.

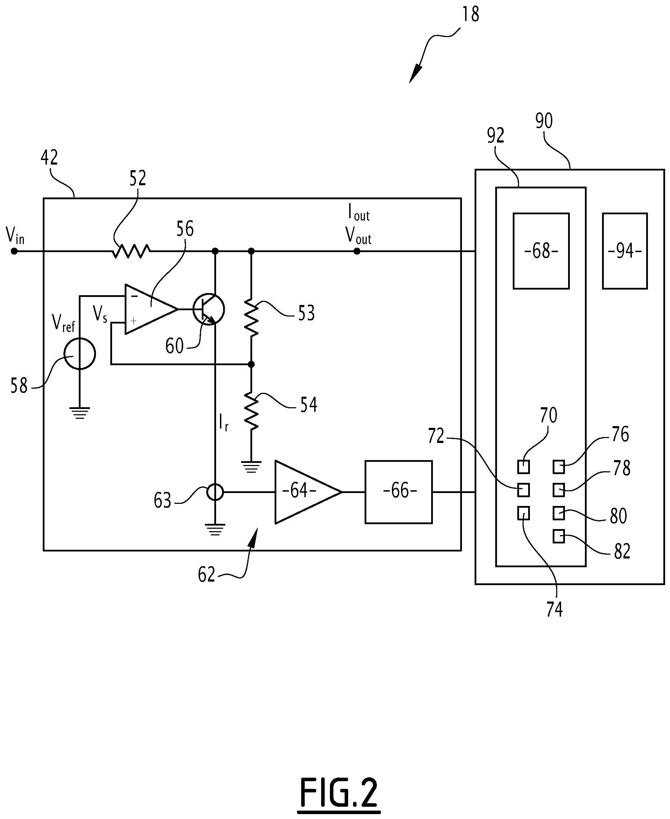

L'unité électronique de contrôle 18 comprend un module de régulation d'alimentation 42. Le module de régulation d'alimentation 42 est représenté en détail à la figure 2. Le module de régulation d'alimentation 42 comprend des résistances 52, 53 et 54, un amplificateur opérationnel 56, une référence de tension 58 et un élément de contrôle 60. L'élément de contrôle 60 est par exemple mis en oeuvre par un transistor de type MOS, ou encore un transistor bipolaire. Le module de régulation d'alimentation 42 est ici un module de régulation de type shunt piloté par l'amplificateur opérationnel 56.

Les résistances 53 et 54 sont connectées en série l'une de l'autre, et en parallèle de l'élément de contrôle 60. Une borne non inverseuse de l'amplificateur opérationnel 56 est connectée entre les résistances 53 et 54, une borne inverseuse de l'amplificateur opérationnel 56 est connectée à la référence de tension 58 et l'élément de contrôle 60 est connecté en sortie de l'amplificateur opérationnel 56.

Lorsque le mécanisme d'ouverture 12 est en configuration de fermeture, la tension d'entrée $V_{in}$ est appliquée en entrée du module de régulation d'alimentation 42, une tension de sortie $V_{out}$ et une intensité de sortie $I_{out}$ sont générées en sortie du module de régulation d'alimentation 42 et un courant interne, d'intensité dite intensité interne $I_r$, circule dans l'élément de contrôle 60.

L'amplificateur opérationnel 56 fonctionne comme un comparateur et compare une différence entre une tension de référence $V_{ref}$ appliquée à la borne inverseuse par la référence de tension 58 et une tension échantillon $V_s$ prélevée entre les résistances 53 et 54.

En cas de variation de la tension d'entrée $V_{in}$, la tension échantillon $V_s$ varie et devient différente de la tension de référence $V_{ref}$. L'amplificateur opérationnel 56 contrôle une ouverture ou une fermeture plus ou moins importante de l'élément de contrôle 60 afin de faire varier l'intensité interne Ir circulant dans l'élément de contôle et ainsi, maintient la tension de sortie $V_{out}$ constante.

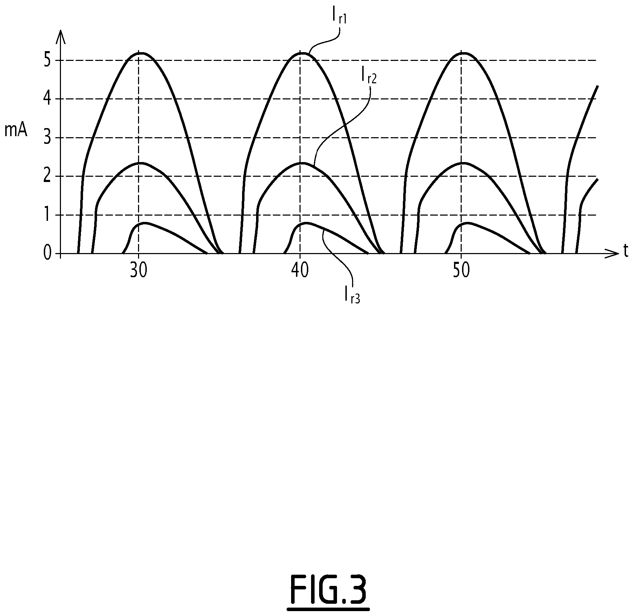

Le module de régulation d'alimentation 42 comprend en outre un détecteur de courant 62, visible à la figure 2. Le détecteur de courant 62 comprend un dispositif de mesure 63, un amplificateur opérationnel 64 connecté au dispositif de mesure 63 et un convertisseur analogique numérique 66, connecté en sortie de l'amplificateur opérationnel 64. Le dispositif de mesure 63 est par exemple une résistance de shunt, ou un montage à miroir de courant, et mesure l'intensité interne $I_r$. Trois exemples d'intensité interne $I_{r1}$, $I_{r2}$ et $I_{r3}$ sont représentés à la figure 3 pour trois valeurs efficaces $U_{ef}$ différentes de la tension d'alimentation $U_e$.

L'amplificateur opérationnel 64 amplifie la mesure réalisée par le dispositif de mesure 63, et le convertisseur analogique numérique 66 convertit le signal reçu en signal numérique utilisé par l'unité électronique de contrôle 18. L'intensité interne $I_r$ est représentative de la tension d'alimentation $U_e$ et l'unité électronique de contrôle 18 est configurée pour déterminer un ensemble de paramètres qui comprend un ou plusieurs paramètres de la tension d'alimentation $U_e$. Ainsi, l'unité électronique de contrôle 18 est configurée pour déduire l'ensemble de paramètres de la tension d'alimentation $U_e$ à partir de la mesure de l'intensité interne $I_r$.

Un paramètre de la tension d'alimentation $U_e$ est une valeur ou un phénomène mesurable qui dépend de la tension d'alimentation $U_e$ et qui décrit une ou plusieurs caractéristiques de la tension d'alimentation $U_e$.

Avantageusement, l'ensemble de paramètres comprend un premier paramètre qui est la valeur efficace $U_{ef}$ de la tension d'alimentation $U_e$.

Par exemple, la valeur efficace $U_{ef}$ de la tension d'alimentation $U_e$ est obtenue par la formule suivante :

$$U_{ef} = Z \times I_{rmax} + K$$

Avec Z une impédance équivalente du circuit d'alimentation 16, Z étant connue,

$I_{rmax}$ la valeur maximale de l'intensité interne $I_r$,
K une constante telle que $K = Z \times I_{out} + V_d + V_{out}$,
$V_d$ étant une tension de déchet du module de régulation d'alimentation 42, qui est connue.

Avantageusement, l'ensemble de paramètres comprend en outre un deuxième paramètre qui est un passage à zéro de la tension d'alimentation $U_e$. Par passage à zéro d'une grandeur, on entend l'annulation de la grandeur.

Les passages à zéro de la tension d'alimentation $U_e$ sont liés d'une part au fait que la tension d'alimentation $U_e$ est alternative, et d'autre part à une fréquence de la tension d'alimentation $U_e$ et constituent donc un paramètre de la tension d'alimentation $U_e$. Une détection des passages à zéro de la tension d'alimentation $U_e$ est obtenue en détectant les passages à zéro de l'intensité interne $I_r$.

Quelle que soit la valeur efficace $U_{ef}$ de la tension d'alimentation $U_e$, l'intensité interne $I_r$ s'annule lorsque la tension d'alimentation $U_e$ s'annule, comme visible à la figure 3 pour trois valeurs différentes de tension efficace d'alimentation $U_{ef}$. Ainsi, la détection de l'annulation de l'intensité interne $I_r$, c'est-à-dire la détection des passages à zéro de l'intensité interne $I_r$ permet de déduire le moment où la tension d'alimentation $U_e$ s'annule, c'est-à-dire les passages à zéro de la tension d'alimentation $U_e$.

L'unité électronique de contrôle 18 comprend en outre une unité de traitement d'information 90, connectée au convertisseur analogique-numérique 66.

L'unité de traitement d'information 90 comprend un module de détection de défaut différentiel 68, connecté à l'unité de conditionnement 32 et au thyristor 26.

De plus, avantageusement, l'unité de traitement d'information 90 comprend plusieurs modules configurés pour réaliser des fonctionnalités.

Dans le mode de réalisation de la figure 2, l'unité de traitement d'information 90 comprend un module de détermination 70, un module de comparaison de valeur efficace 72, un module de commande 74, un module de détection de passages à zéro 76, un module de calcul 78, un module de comparaison de compteur 80 et un module d'émission 82.

Le module de détermination 70, le module de comparaison de valeur efficace 72 et le module de commande 74 coopèrent pour mettre en oeuvre une fonctionnalité de détermination du mode de fonctionnement de l'unité électronique de contrôle 18, en fonction du premier paramètre de la tension d'alimentation $U_e$, comme décrit plus en détail ci-après.

Le module de détection de passages à zéro 76, le module de calcul 78, le module de comparaison de compteur 80 et le module d'émission 82 coopèrent pour mettre en oeuvre une fonctionnalité d'auto-surveillance de la réalisation des tests de bon fonctionnement du dispositif de protection 10 en fonction d'un deuxième paramètre de la tension d'alimentation $U_e$, comme décrit plus en détail ci-après.

Dans le mode de réalisation décrit en référence à la figure 2, l'unité électronique de contrôle 18 met en oeuvre à la fois la fonctionnalité d'auto-surveillance de la réalisation des tests de bon fonctionnement du dispositif de protection 10 et la fonctionnalité de détermination du mode de fonctionnement de l'unité électronique de contrôle 18.

Selon des variantes, l'unité électronique de contrôle 18 met en oeuvre la fonctionnalité d'auto-surveillance de la réalisation des tests de bon fonctionnement du dispositif de protection 10 ou la fonctionnalité de détermination du mode de fonctionnement de l'unité électronique de contrôle 18.

De manière avantageuse, l'unité de traitement d'informations 90 est formée par exemple d'une mémoire 92, et d'un processeur 94, le processeur 94 étant associé à la mémoire 92. En variante, le processeur 94 est une unité logique câblée.

Dans l'exemple de la figure 2, le module de détection de défaut différentiel 68, et en complément facultatif, le module de détermination 70, le module de comparaison de valeur efficace 72, le module de commande 74, le module de détection de passages à zéro 76, le module de calcul 78, le module de comparaison de compteur 80 et le module d'émission 82, sont réalisés chacun sous forme d'un logiciel, ou d'une brique logicielle, exécutable par le processeur 94. La mémoire 92 de l'unité électronique de contrôle 18 est alors apte à stocker un logiciel de détection de défaut différentiel, ainsi qu'en complément facultatif, un logiciel de détermination, un logiciel de comparaison de valeur efficace, un logiciel de commande, un logiciel de détection de passages à zéro, un logiciel de calcul, un logiciel de comparaison de compteur et un logiciel d'émission.

En variante, chaque module 68, 70, 72, 74, 76, 78, 80 et 82 peut être réalisé sous la forme d'unités logiques programmées ou câblées, utilisant par exemple de la logique combinatoire et/ou séquentielle, tel qu'un microcontrôleur, un FPGA, de l'anglais *Field Programmable Gate Array,* ou encore d'un circuit intégré, tel qu'un ASIC, de l'anglais *Application Spécifie Integrated Circuit.*

Le processeur 94 est alors apte à exécuter chacun des logiciels parmi le logiciel de détection de défaut différentiel, ainsi qu'en complément facultatif, un logiciel de détermination, un logiciel de comparaison de valeur efficace, un logiciel de commande, un logiciel de détection de passages à zéro, un logiciel de calcul, un logiciel de comparaison de compteur et un logiciel d'émission.

Le module de détection de défaut différentiel 68 reçoit la mesure de courant différentiel effectuée par le détecteur différentiel 14 et détermine si un défaut différentiel est présent dans la charge 5. Si un défaut différentiel est détecté, par exemple si l'intensité du courant différentiel mesuré par le détecteur différentiel 14 est supérieure à quelques milliampères, le module de détection de défaut différentiel 68 commande le mécanisme d'ouverture 12 pour qu'il bascule en configuration d'ouverture. Plus spécifiquement, le module de détection de défaut différentiel 68 commande le thyristor 26 pour générer une impulsion électrique et créer un champ magnétique dans la bobine 21, qui cause l'ouverture des contacts 23 et 24, ainsi que mentionné précédemment.

Avantageusement, le module de détection de passages à zéro 76 détecte l'annulation de l'intensité interne $I_r$, en d'autres termes détecte les passages à zéro de l'intensité interne $I_r$, et par conséquent détecte les passages à zéro de la tension d'alimentation $U_e$.

Dans le cas où l'intensité interne $I_r$ et la tension d'alimentation $U_e$ sont déphasées, le module de détection de passages à zéro 76 est avantageusement configuré pour ajouter une constante correspondant au déphasage, à chaque annulation de l'intensité interne $I_r$, afin de déduire correctement le passage à zéro de la tension d'alimentation $U_e$.

De manière avantageuse, l'unité électronique de contrôle 18 met en oeuvre un compteur et est configurée initialiser le compteur lorsqu'un basculement du mécanisme d'ouverture 12 dans la configuration d'ouverture causé par un défaut différentiel détecté par le module de détection de défaut différentiel 68 a lieu. Ainsi, le compteur est initialisé soit lors de l'apparition d'un vrai défaut différentiel, soit par l'apparition d'un défaut différentiel induit lors d'un test du dispositif de protection 10. Le compteur est configuré en outre pour qu'une valeur C du compteur soit incrémentée à chaque détection d'un passage à zéro de la tension d'alimentation $U_e$.

De manière avantageuse, c'est le module de calcul 78 qui met en oeuvre le compteur et qui incrémente la valeur du compteur à chaque détection d'un passage à zéro de la tension d'alimentation $U_e$.

L'unité électronique de contrôle 18 est avantageusement configurée pour émettre une alarme lorsque la valeur C du compteur est supérieure ou égale à un seuil de compteur Cs.

De manière particulièrement avantageuse, c'est le module de comparaison de compteur 80 qui est configuré pour comparer la valeur C du compteur avec le seuil de compteur Cs.

Lorsque la valeur C du compteur est supérieure ou égale au seuil de compteur Cs, le module d'émission 82 émet une alarme, par exemple sous forme visuelle ou sonore, par exemple via une LED disposée sur le dispositif de protection 10.

Selon un autre mode de réalisation, le dispositif 10 comprend un module de communication, non représenté. Le module d'émission 82 est alors configuré pour émettre un message d'alarme via le module de communication à destination d'un dispositif récepteur, le message d'alarme comprenant une information correspondant à l'alarme. L'émission du message d'alarme est réalisée par exemple via une connexion filaire ou par émission de radiofréquences. Ledit dispositif récepteur est configuré pour afficher un message correspondant à l'alarme et/ou déclencher un signal sonore.

La mise en oeuvre du compteur permet notamment de mesurer une durée, par exemple et de manière particulièrement avantageuse, une durée depuis laquelle le dispositif de protection électrique différentielle a été déclenché pour la dernière fois, c'est-à-dire une durée depuis laquelle le mécanisme d'ouverture 12 a basculé dans la configuration d'ouverture pour la dernière fois.

Le seuil de compteur Cs est choisi pour que la durée entre le dernier déclenchement et l'émission de l'alarme corresponde à une durée recommandée pour effectuer un test du dispositif de protection électrique différentielle 10. Ainsi, l'alarme prévient l'utilisateur qu'il doit tester le dispositif de protection électrique différentielle 10 pour vérifier le bon déclenchement du dispositif de protection électrique différentielle 10.

Lorsque le dispositif de protection électrique différentielle 10 est déclenché, ou dans le cas où la source 3 arrête de fournir du courant, ou, plus généralement, lorsque la tension d'alimentation $U_e$ est nulle, l'unité électronique de contrôle 18 n'est plus alimentée. Avantageusement, tant que l'unité électronique de contrôle 18 n'est pas alimentée, le module de calcul 78 n'incrémente pas la valeur C du compteur, et à la place enregistre la valeur C du compteur. La durée entre le déclenchement du dispositif de protection 10 et l'émission de l'alarme correspond alors à une durée de fonctionnement, ce qui évite de tester le dispositif de protection 10 alors qu'il n'a pas été, ou peu été utilisé.

De manière particulièrement avantageuse, le seuil de compteur Cs est recalculé en fonction de paramètres externes au dispositif de protection 10, comme une température externe, un nombre de déclenchements causés par un défaut différentiel, une humidité ambiante, ou encore diminue en fonction du temps pour prendre en compte un vieillissement du dispositif de protection 10 et une nécessité de raccourcir la durée entre deux tests successifs.

Le module de détermination 70 détermine la valeur efficace $U_{ef}$ de la tension d'alimentation $U_e$ à partir du signal transmis par le détecteur de courant 62.

Avantageusement, l'unité électronique de contrôle 18 est configurée en outre pour fonctionner selon un mode parmi un mode normal $M_n$, un premier mode dégradé $M_1$ et, de manière optionnelle, un deuxième mode dégradé $M_2$ et possiblement un troisième mode dégradé. En variantes non représentées, l'unité électronique de contrôle est configurée pour fonctionner selon un mode normal et un seul mode dégradé, ou selon plus de deux modes dégradés.

Une puissance consommée par l'unité électronique de contrôle 18 est supérieure dans le mode normal $M_n$ à la puissance consommée par l'unité électronique de contrôle 18 dans le premier mode dégradé $M_1$. La puissance consommée par l'unité électronique de contrôle 18 dans le premier mode dégradé $M_1$ est supérieure à la puissance consommée par l'unité électronique de contrôle 18 dans le deuxième mode dégradé $M_2$.

L'unité électronique de contrôle 18 est configurée pour basculer entre le mode normal $M_n$ et le premier mode dégradé $M_1$ lorsque la valeur efficace $U_{ef}$ est inférieure à un premier seuil de tension $U_1$, et pour basculer entre le mode normal $M_n$ ou le premier mode dégradé $M_1$ et le deuxième mode dégradé $M_2$ lorsque la valeur efficace $U_{ef}$ est inférieure à un deuxième seuil de tension $U_2$. Les premier et deuxième seuils de tension $U_1$ et $U_2$ sont distincts l'un de l'autre et le premier seuil de tension $U_1$ est supérieur au deuxième seuil de tension $U_2$.

Par exemple le premier seuil de tension $U_1$ est égal à 85% d'une tension réseau nominale, par exemple 195V dans le cas où la tension réseau nominale est de 230V, et le deuxième seuil de tension $U_2$ est égal à 50V.

De manière particulièrement avantageuse, le module de détermination 70, le module de comparaison de valeur efficace 72 et le module de commande 74 sont configurés pour basculer l'unité électronique de contrôle 18 dans le mode normal $M_n$ ou l'un des modes dégradés $M_1$ ou $M_2$. Le module de comparaison de valeur efficace 72 est configuré pour comparer la valeur efficace $U_{ef}$ de la tension d'alimentation $U_e$ avec les premier et deuxième seuils de tension $U_1$ et $U_2$.

Le module de commande 74 est configuré pour commander le passage de l'unité électronique de contrôle 18 en mode normal $M_n$ si la valeur efficace $U_{ef}$ de la tension d'alimentation est supérieure ou égale au premier seuil de tension $U_1$, pour commander le passage de l'unité électronique de contrôle 18 dans le premier mode dégradé $M_1$ si la valeur efficace $U_{ef}$ de la tension d'alimentation $U_e$ est inférieure au premier seuil de tension $U_1$ mais supérieure au deuxième seuil de tension $U_2$, et pour commander le passage de l'unité électronique de contrôle 18 dans le deuxième mode dégradé $M_2$ si la valeur efficace $U_{ef}$ de la tension d'alimentation est inférieure au deuxième seuil de tension $U_2$.

Selon un autre mode de réalisation, l'unité électronique de contrôle 18 est configurée pour fonctionner en outre selon un troisième mode dégradé. Le troisième mode dégradé intervient en cas de surtension de la tension d'alimentation $U_e$. Dans le cas où le circuit d'alimentation 16 est connecté en aval des contacts 23, 24, les contacts 23,24 sont ouverts afin de protéger le dispositif de protection 10 et la charge 5. Dans le cas où le circuit d'alimentation 16 est connecté en amont des contacts 23 et 23, les contacts 23 et 24 sont ouverts afin de protéger la charge 5 et une alarme de défaut est envoyée.

L'unité électronique de contrôle 18 assure le fonctionnement du module de détection de défaut différentiel 68, quel que soit son mode de fonctionnement. Ainsi, quel que soit le mode dans lequel fonctionne l'unité électronique de contrôle 18, le dispositif de protection électrique différentielle 10 assure une protection contre les défauts différentiels. Cela est particulièrement avantageux dans le cas où la tension d'alimentation $U_e$ fluctue de manière transitoire, par exemple en cas de baisse de tension du courant fourni par la source 3, puisque le dispositif de protection 10 continue d'assurer sa fonction principale qui est la protection contre les défauts différentiels, quelle que soit la valeur efficace $U_{ef}$ de la tension d'alimentation $U_e$.

De manière particulièrement avantageuse, le module de détection de défaut différentiel 68 est configuré pour mettre en oeuvre différents algorithmes, de complexité variable, afin de détecter un défaut différentiel. La puissance consommée par l'unité électronique de contrôle 18 varie en fonction de l'algorithme mis en oeuvre, en particulier, elle est plus élevée pour un algorithme complexe que pour un algorithme simple.

Ainsi, de manière particulièrement avantageuse, lorsque l'unité électronique de contrôle 18 fonctionne dans le mode normal $M_n$, le module de détection de défaut différentiel 68 met en oeuvre un algorithme complexe, lorsque l'unité électronique de contrôle 18 fonctionne dans le premier mode dégradé $M_1$, le module de détection de défaut différentiel 68 met en oeuvre un algorithme de complexité intermédiaire, et lorsque l'unité électronique de contrôle 18 fonctionne dans le deuxième mode dégradé $M_2$, le module de détection de défaut différentiel 68 met en oeuvre un algorithme simple, afin d'adapter la puissance consommée à une puissance fournie à l'unité électronique de contrôle 18.

Dans le mode normal $M_n$, l'ensemble des modules 70 à 82 de l'unité électronique de contrôle 18 sont alimentés en électricité et fonctionnement normalement. Dans le premier ou le deuxième mode dégradé $M_1$ ou $M_2$, de manière avantageuse, certains modules ne sont pas alimentés. Par exemple, le module de comparaison de compteur 80 et le module d'émission 82 ne sont pas alimentés lorsque l'unité électronique de contrôle 18 fonctionne dans l'un des modes dégradés $M_1$ ou $M_2$. Dans ce cas, l'alarme n'est émise que lorsque l'unité électronique de contrôle 18 fonctionne dans le mode normal $M_n$. Ceci permet notamment de s'assurer que le module de détection de défaut différentiel 68 dispose de la puissance électrique nécessaire à son fonctionnement quelque soit le mode, normal $M_n$ ou dégradé $M_1$, $M_2$.

De manière avantageuse, lorsque l'unité électronique de contrôle 18 fonctionne dans le mode normal $M_n$, la puissance consommée par l'unité électronique de contrôle 18 est supérieure à la puissance fournie à l'unité électronique de contrôle 18 par le circuit d'alimentation 16 lorsque la valeur efficace $U_{ef}$ de la tension d'alimentation $U_e$ est inférieure au premier seuil de tension $U_1$. Ainsi, la puissance consommé par l'unité électronique de contrôle 18 est adaptée à la puissance fournie de manière dynamique, et l'unité électronique de contrôle 18 met en oeuvre des fonctions supplémentaires qui ne pourraient pas être implémentées si toutes les fonctions devaient être fonctionnelles quelle que soit la valeur efficace $U_{ef}$ de la tension d'alimentation $U_e$.

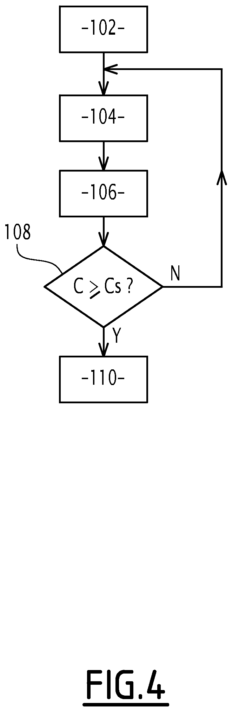

Un procédé d'auto-surveillance de la réalisation des tests de bon fonctionnement du dispositif de protection 10 en fonction du deuxième paramètre de la tension d'alimentation $U_e$, mis en oeuvre par l'unité électronique de contrôle 18 est maintenant décrit, en lien avec la figure 4.

Une étape 102 d'initialisation du compteur de détection d'un passage à zéro de la tension d'alimentation, autrement dit une remise à zéro de la valeur C du compteur, est effectuée par le module de calcul 78 suite à la détection d'un défaut différentiel et au déclenchement du dispositif de protection 10.

Une étape 104 de détection d'un passage à zéro de la tension d'alimentation $U_e$ est effectuée par le module de détection de passage à zéro 76.

Suite à l'étape 104, c'est-à-dire lorsqu'un passage à zéro a été détecté, une étape 106 d'incrémentation de la valeur C du compteur est effectuée par le module de calcul 78.

Une étape 108 de comparaison de la valeur C du compteur avec le seuil de compteur Cs est effectuée par le module de comparaison de compteur 80.

Si la valeur C du compteur est supérieure ou égale au seuil de compteur Cs, une étape 110 d'émission de l'alarme est effectuée par le module d'émission 82. Sinon, le procédé est répété à partir de l'étape 104 et le passage à zéro suivant est détecté.

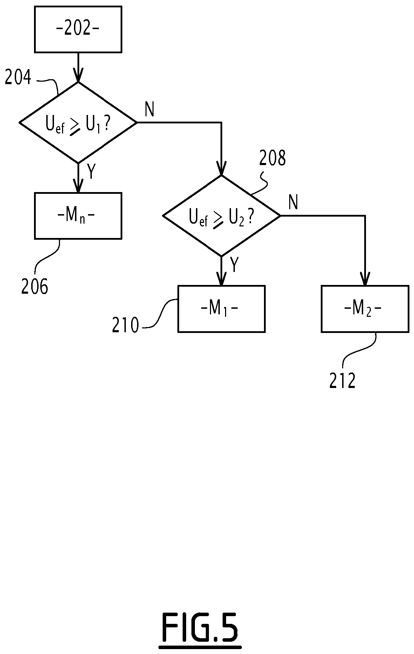

Un procédé de détermination du mode de fonctionnement l'unité électronique de contrôle 18 est maintenant décrit, en lien avec la figure 5.

Une étape 202 de détermination de la valeur efficace $U_{ef}$ est réalisée par le module de détermination 70.

Une étape 204 de comparaison de la valeur efficace $U_{ef}$ au premier seuil de tension $U_1$ est mise en oeuvre par le module de comparaison 72.

Si la valeur efficace $U_{ef}$ de la tension d'alimentation $U_e$ est supérieure ou égale au premier seuil de tension $U_1$, une étape 206 de commande du passage de l'unité électronique de contrôle 18 en mode normal $M_n$ est mise en oeuvre par le module de commande 74.

Si la valeur efficace $U_{ef}$ de la tension d'alimentation est inférieure au premier seuil de tension $U_1$, une étape 208 de comparaison entre la valeur efficace $U_{ef}$ de la tension d'alimentation $U_e$ et le deuxième seuil de tension $U_2$ est mise en oeuvre par le module de comparaison 72.

Si la valeur efficace $U_{ef}$ de la tension d'alimentation $U_e$ est supérieure ou égale au deuxième seuil de tension $U_2$, une étape 210 de commande du passage de l'unité électronique de contrôle 18 en premier mode dégradé $M_1$ est mise en oeuvre par le module de commande 74.

Si la valeur efficace $U_{ef}$ de la tension d'alimentation $U_e$ est inférieure au deuxième seuil de tension $U_2$, une étape 212 de commande du passage de l'unité électronique de contrôle 18 en deuxième mode dégradé $M_2$ est mise en oeuvre par le module de commande 74.

De manière avantageuse, le procédé de détermination du mode de fonctionnement de l'unité électronique de contrôle 18 est exécuté en permanence, c'est-à-dire qu'une fois l'étape 212 terminée, le procédé de détermination du mode de fonctionnement est à nouveau effectué, et cela tant que le dispositif de protection 10 est connecté entre la source 3 et la charge 5.

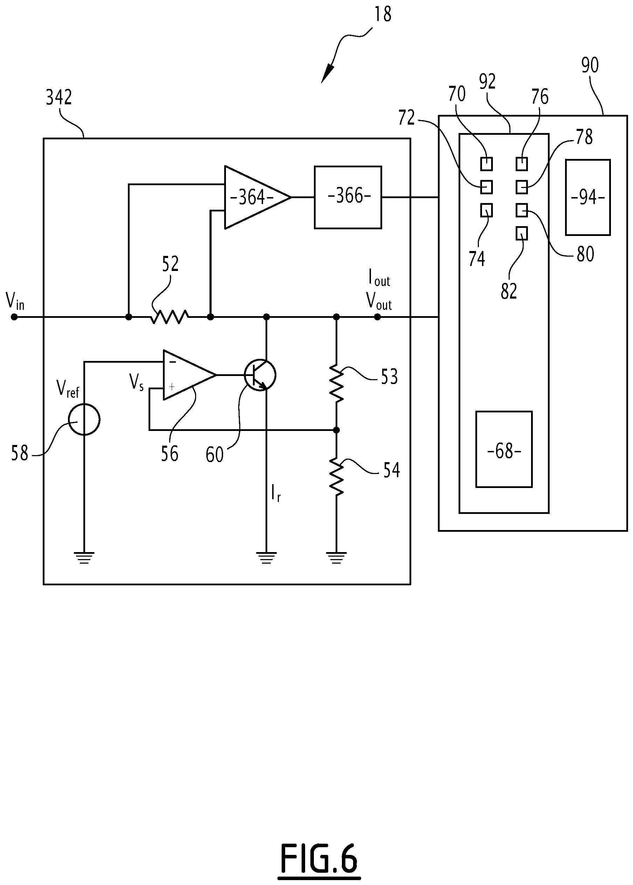

La figure 6 illustre un module d'alimentation 342, qui est une deuxième mode de réalisation du module d'alimentation 42. Dans la figure 6, des signes de référence augmentés de 300 sont utilisés pour désigner des caractéristiques correspondant à celles décrites pour les figures 1 à 5, mais qui présentent des différences.

Le module d'alimentation 342 comprend un détecteur de courant 362, qui remplace le détecteur de courant 62. Le détecteur de courant 362 comprend un amplificateur opérationnel 364 et un convertisseur analogique numérique 366, connecté en sortie de l'amplificateur opérationnel 364. L'amplificateur opérationnel 364 est connecté en parallèle de la résistance 52, afin de mesurer une tension aux bornes de la résistance 52 et d'en déduire le courant circulant dans la résistance 52. Ce courant est égal à la somme des intensités $I_r$ et $I_{out}$. Ainsi, l'intensité $I_{out}$ étant constante, la valeur de l'intensité interne $I_r$ peut être déduite par le module de détermination 70.

En variante non représentée, la source 3 et la charge 5 sont reliées entre elles par deux conducteurs de phase. Selon une autre variante non représentée, la source 3 et la charge 5 sont reliées entre elles par une pluralité de conducteurs de phase 7 et un conducteur de neutre 8, par exemple dans le cas d'une alimentation électrique triphasée ou polyphasée.

En variante, la tension d'alimentation $U_e$ est continue. Dans ce cas, la mesure de l'intensité interne $I_r$ ne permet pas de déduire des passages à zéro, puisque la tension d'alimentation $U_e$ étant continue, elle ne s'annule pas à intervalles réguliers. Le procédé d'auto-surveillance de la réalisation des tests n'est alors pas mis en oeuvre par l'unité électronique de contrôle 18. La mesure de la tension efficace $U_{ef}$ est cependant toujours effectuée, et donc le procédé de détermination du mode de fonctionnement de l'unité électronique de contrôle 18 est effectué.

Avantageusement, la mesure de l'intensité interne $I_r$ permet ainsi de déduire des paramètres de la tension d'alimentation $U_e$, en modifiant seulement l'unité électronique de contrôle 18 sans y ajouter d'entrée supplémentaire. Ainsi, il est possible de mettre en oeuvre des fonctions supplémentaires dans le dispositif de protection 10, de manière simple, sans ajouter de composants supplémentaires externes à l'unité électronique de contrôle 18 et donc en limitant le coût du dispositif de protection électrique différentielle 10.

**Revendications**

1. Dispositif de protection électrique différentielle (10), configuré pour être connecté entre une source (3) et une charge (5), le dispositif (10) comprenant :

- un circuit d'alimentation (16), configuré pour être connecté à la source (3), et pour être alimenté électriquement par la source (3) sous une tension dite tension d'alimentation ($U_e$), variable au cours du temps ;
- un détecteur différentiel (14), configuré pour effectuer une mesure d'un courant différentiel circulant dans la charge (5) ;
- un mécanisme d'ouverture (12), configuré pour basculer depuis une configuration de fermeture, dans laquelle la source (3) et la charge (5) sont connectées l'une à l'autre, dans une configuration d'ouverture, dans laquelle la source (3) et la charge (5) sont isolées l'une de l'autre ;
- une unité électronique de contrôle (18) comprenant :

  ◦ un module de détection de défaut différentiel (68), connecté au détecteur différentiel (14) et au mécanisme d'ouverture (12), le module de détection de défaut différentiel (68) étant configuré pour recevoir la mesure du courant différentiel et pour commander un basculement du mécanisme d'ouverture (12) dans la configuration d'ouverture lorsque le module de détection de défaut différentiel (68) détecte un défaut différentiel ; et
  ◦ un module de régulation d'alimentation (42 ; 342), connecté au circuit d'alimentation (16),

le dispositif de protection électrique différentielle (10) étant **caractérisé en ce que** le module de régulation d'alimentation (42 ; 342) comprend un détecteur de courant (62 ; 362), configuré pour effectuer une mesure d'une intensité interne ($I_r$) d'un courant interne circulant dans le module de régulation d'alimentation (42 ; 342), l'intensité interne ($I_r$) étant représentative de la tension d'alimentation ($U_e$), l'unité électronique de contrôle (18) étant configurée pour déterminer un ensemble de paramètres de la tension d'alimentation ($U_e$) à partir de la mesure de l'intensité interne ($I_r$) effectuée par le détecteur de courant (62 ; 362).

2. Dispositif (10) selon la revendication 1, dans lequel le module de régulation d'alimentation (42 ; 342) comprend un élément de contrôle (60) et un amplificateur opérationnel (56) configuré pour contrôler une ouverture ou une fermeture plus ou moins importante de l'élément de contrôle (60) afin de faire varier l'intensité interne ($I_r$) pour maintenir une tension de sortie ($V_{out}$), générée en sortie du module de régulation d'alimentation (42 ; 342), constante.

3. Dispositif (10) selon la revendication 1 ou 2, dans lequel l'ensemble de paramètres comprend un premier paramètre déterminé par l'unité de contrôle (18), le premier paramètre étant une valeur efficace ($U_{ef}$) de la tension d'alimentation ($U_e$), et dans lequel l'unité électronique de contrôle (18) est configurée pour fonctionner selon un mode normal ($M_n$) et au moins un mode dégradé ($M_1$, $M_2$), une puissance consommée par l'unité électronique de contrôle (18) dans le mode dégradé ($M_1$, $M_2$) étant inférieure à la puissance consommée par l'unité électronique de contrôle (18) dans le mode normal ($M_n$), l'unité électronique de contrôle (18) étant en outre configurée pour passer du mode normal ($M_n$) au mode dégradé ($M_1$, $M_2$) lorsque le premier paramètre est inférieur à un seuil de tension ($U_1$, $U_2$).

4. Dispositif (10) selon la revendication 3, dans lequel une puissance fournie à l'unité électronique de contrôle (18) lorsque la valeur efficace ($U_{ef}$) est inférieure au seuil de tension ($U_1$, $U_2$) est inférieure à la puissance consommée par l'unité électronique de contrôle (18) dans le mode normal ($M_n$).

5. Dispositif (10) selon l'une quelconque des revendications 3 ou 4, dans lequel l'unité électronique de contrôle (18) est configurée pour fonctionner selon un premier mode dégradé ($M_1$) et le seuil de tension est un premier seuil de tension ($U_1$), l'unité électronique de contrôle (18) étant en outre configurée pour fonctionner selon un deuxième mode dégradé ($M_2$), la puissance consommée par l'unité électronique de contrôle (18) dans le deuxième mode dégradé ($M_2$) étant inférieure à la puissance consommée par l'unité électronique de contrôle (18) dans le premier mode dégradé ($M_1$), l'unité électronique de contrôle (18) étant en outre configurée pour passer du premier mode dégradé ($M_1$) au deuxième mode dégradé ($M_2$) lorsque le premier paramètre est inférieur à un deuxième seuil de tension ($U_2$), strictement inférieur au premier seuil de tension ($U_1$).

6. Dispositif (10) selon l'une quelconque des revendications 1 à 5, dans lequel l'ensemble de paramètres comprend un deuxième paramètre déterminé par l'unité de contrôle (18), le deuxième paramètre étant un passage à zéro de la tension d'alimentation, et dans lequel l'unité électronique de contrôle (18) met en oeuvre un compteur, l'unité électronique de contrôle (18) étant configurée pour incrémenter une valeur (C) du compteur à chaque détection d'un passage à zéro de la tension d'alimentation ($U_e$), l'unité électronique de contrôle (18) étant en outre configurée pour émettre une alarme lorsque la valeur (C) du compteur est égale à un seuil de compteur (Cs).

7. Dispositif (10) selon la revendication 6, dans lequel la valeur (C) du compteur est remise à zéro lorsque le mécanisme d'ouverture (12) bascule dans la configuration d'ouverture suite à la détection d'un défaut différentiel par le module de détection de défaut différentiel (68).

8. Dispositif (10) selon l'une quelconque des revendications 6 à 7, dans lequel, lorsque la tension d'alimentation ($U_e$) est nulle, la valeur (C) du compteur n'est pas incrémentée et est enregistrée par l'unité électronique de contrôle (18).

9. Dispositif (10) selon l'une quelconque des revendications précédentes, dans lequel l'unité électronique de contrôle (18) est mise en oeuvre sous forme d'un circuit intégré.

10. Dispositif (10) selon la revendication 3, dans lequel l'unité électronique de contrôle (18) comprend :

   - un module de détermination (70), configuré pour déterminer la valeur efficace ($U_{ef}$) ;
   - un module de comparaison de valeur efficace (72), configuré pour comparer la valeur efficace ($U_{ef}$) au seuil de tension ($U_1$); et
   - un module de commande (74), configuré pour commander un passage de l'unité électronique de contrôle (18) en mode normal ($M_n$) si la valeur efficace ($U_{ef}$) est supérieure ou égale au seuil de tension ($U_1$) et configuré pour commander un passage de l'unité électronique de contrôle (18) en mode dégradé ($M_1$, $M_2$) si la valeur efficace ($U_{ef}$) est inférieure au seuil de tension ($U_1$).

11. Dispositif (10) selon la revendication 6, dans lequel l'unité électronique de contrôle (18) comprend :

   - un module de détection de passages à zéro (76), configuré pour détecter un passage à zéro de l'intensité interne ($I_r$) et d'en déduire un passage à zéro de la tension d'alimentation ($U_e$) ;
   - un module de calcul (78), configuré pour incrémenter la valeur du compteur, le passage à zéro de la tension d'alimentation ($U_e$) ayant été détecté ;
   - un module de comparaison de compteur (80), configuré pour comparer la valeur (C) du compteur avec le seuil de compteur (Cs) ; et
   - un module d'émission (82) configuré pour émettre l'alarme lorsque la valeur (C) du compteur est égale au seuil de compteur (Cs).

## FIG.1

## FIG.2

## FIG.3

```
            ┌─────────┐
            │  -102-  │
            └────┬────┘
                 │
                 ▼◄──────────────┐
            ┌─────────┐          │
            │  -104-  │          │
            └────┬────┘          │
                 │               │
                 ▼               │
            ┌─────────┐          │
            │  -106-  │          ▲
            └────┬────┘          │
108              │               │
   \             ▼               │
    \         ◇                  │
     \      ╱   ╲      N         │
      ──── ◇ C ≥ Cs ? ◇─────────┘
            ╲   ╱
              ◇
                 │ Y
                 ▼
            ┌─────────┐
            │  -110-  │
            └─────────┘
```

# FIG.4

-202-

204 — $U_{ef} \geqslant U_1$ ? ——N——

Y

-M$_n$-

206

208

$U_{ef} \geqslant U_2$ ? ——N——

Y

210 — -M$_1$-          -M$_2$-

212

# FIG.5

## FIG.6

Europäisches
Patentamt

European
Patent Office

Office européen
des brevets

# RAPPORT DE RECHERCHE EUROPEENNE

Numéro de la demande

EP 24 20 6076

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/063109 A1 (BALDWIN JOHN R [US]) 24 mars 2005 (2005-03-24) | 1,2,6-9, 11 | INV. H02H3/33 |
| A | * alinéas [0024] - [0036]; figure 2 * ----- | 3-5,10 | H02H1/06 |
| X | US 2017/322254 A1 (OSTROVSKY MICHAEL [US] ET AL) 9 novembre 2017 (2017-11-09) * alinéas [0052] - [0056]; figures 1, 4a, 4b * ----- | 1 | |
| A | US 4 688 134 A (FREEMAN LEROY M [US] ET AL) 18 août 1987 (1987-08-18) * colonne 8, lignes 30-55; figures 14-16 * ----- | 3-5,10 | |

**DOMAINES TECHNIQUES RECHERCHES (IPC)**

H02H

Le présent rapport a été établi pour toutes les revendications

| Lieu de la recherche | Date d'achèvement de la recherche | Examinateur |
|---|---|---|
| Munich | 11 mars 2025 | Colombo, Alessandro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 20 6076

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-03-2025

| Document brevet cité au rapport de recherche | Date de publication | Membre(s) de la famille de brevet(s) | | Date de publication |
|---|---|---|---|---|
| US 2005063109 A1 | 24-03-2005 | CA | 2383738 A1 | 26-10-2002 |
| | | US | 2002181175 A1 | 05-12-2002 |
| | | US | 2005063109 A1 | 24-03-2005 |
| US 2017322254 A1 | 09-11-2017 | CA | 2711903 A1 | 06-08-2009 |
| | | CN | 101910856 A | 08-12-2010 |
| | | US | 2010295568 A1 | 25-11-2010 |
| | | US | 2014197856 A1 | 17-07-2014 |
| | | US | 2017322254 A1 | 09-11-2017 |
| | | US | 2020278388 A1 | 03-09-2020 |
| | | WO | 2009097469 A1 | 06-08-2009 |
| US 4688134 A | 18-08-1987 | AUCUN | | |

EPO FORM P0460

Pour tout renseignement concernant cette annexe : voir Journal Officiel de l'Office européen des brevets, No.12/82